# EUROPEAN PATENT APPLICATION

(11) **EP 3 702 074 A1**
(43) Date of publication of application: **02.09.2020**
(21) Application number: 19160319.0
(22) Date of filing: 01.03.2019
(51) Int. Cl.: B23B 27/04, B23B 27/08

(54) **INDEXABLE CUTTING INSERT**

(71) Applicant: Whizcut of Sweden AB, 254 52 Helsingborg (SE)
(72) Inventor: SCHMIDT, Erik, 254 33 HELSINGBORG (SE)
(74) Representative: Brann AB

(57) **Abstract**

The proposed technology relates to an indexable cutting insert (10) for a cutting tool. The cutting insert (10) comprises: a first side surface (12) and an opposing second side surface (14), and a peripheral surface (16) extending between the first side surface (12) and the second side surface (14). The cutting portion (18) comprises a first cutting face (24) and an opposing second cutting face (26), a flank face (28) extending between the first cutting face (24) and the second cutting face (26), a first cutting edge (20) between the first cutting face (24) and the flank face (28), and a second cutting edge (22) between the second cutting face (26) and the flank face (28). The cutting portion (18) is bisected by a first plane (AA') transverse to the first side surface (12) and the cutting portion (18) has a biconcave cross-section transverse to the first plane (AA').

## Description

### Technical field

The proposed technology generally relates to the field of cutting tools in turning or lathing applications. Further, the proposed technology specifically relates to cutting inserts, or replaceable tips, for cutting tools, and in particular to indexable cutting inserts.

### Background

In turning or lathing applications, it is known to have cutting inserts that are indexable, which means that they can quickly and easily be repositioned in a new orientation on a tool holder. Such cutting inserts have at least two cutting edges, and the indexing switches the cutting edge that engages a work part. The number of cutting edges typically limits the minimal size of the cutting insert, the greater the number cutting edges, the greater the minimal size must be.

In some applications, for example groove-turning and parting-off applications, there is a need for indexable cutting inserts that are shorter and have a smaller cutting width. This can be achieved by reducing the scale of a cutting insert. However, this generally leads to a reduced stability and strength of the cutting insert. The ability to transport heat from the cutting edge is also reduced.

### Object

It is an object of the proposed technology to achieve indexable cutting insert that are shorter and have narrower cutting widths, but with maintained strength, stability, and heat transport capacity.

### Summary

According to a first aspect of the proposed technology, an indexable cutting insert for a cutting tool is provided. The cutting insert comprises: a first side surface and an opposing second side surface, and a peripheral surface extending between the first side surface and the second side surface. The cutting insert further comprises: a cutting portion comprising: a first cutting face and an opposing second cutting face, a flank face extending between the first cutting face and the second cutting face, a first cutting edge between the first cutting face and the flank face, and a second cutting edge between the second cutting face and the flank face. The cutting portion is bisected by a first plane transverse to the first side surface.

Preferably, the cutting tool is a turning tool for turning applications, for example lathing. The cutting tool may be a groove-turning or parting-off cutting tool.

The first cutting edge, the second cutting edge, the first cutting face, the second cutting face, and the flank face are understood to be located on, or form part of, the peripheral surface. The peripheral surface may encircle the complete cutting insert. A cutting face is understood to face a work part, or to face in the cutting direction, during use. A flank face is understood to face the new or machined surface of a work part during use. The first cutting face and/or the second cutting face may be transverse to the flank face. A side surface is understood to extend over the complete length and height of the cutting insert. The width of the cutting insert is understood as corresponding to the separation or distance between the first side surface and the second side surface.

The cutting portion being bisected by a first plane is understood to encompass the first plane dividing the cutting portion in two congruent portions, or the cutting portion being constituted by first and second congruent portions with respect to the first plane transverse to the first side surface. The first plane may cut the flank face in two congruent portions.

Congruent portions are here understood to encompass the shape of the portions being transformable to one another by reflection and/or rotation. The first cutting edge and the second cutting edge being located on the same cutting portion means that the cutting insert is double sided and that it can be used either with the first side surface or the second side surface facing a tool holder for the cutting insert.

The cutting portion may have a proximal end and a distal end, and the first cutting edge and the second cutting edge, and/or the flank face may be located at the distal end of the cutting portion. It is understood that the proximal end and the distal end are on opposed sides of the cutting portion.

The cutting portion may have a biconcave cross-section extending between the first cutting face and the second cutting face, and/or transverse or perpendicular to the first plane. The biconcave cross-section contributes to an improved tangential side clearance at the cutting edges. The width of the cutting portion increases non-linearly when going from the center of the cutting portion towards the cutting faces. The increase in width is the greatest at the cutting faces. This means that at a given tangential side clearance angle, the width at the center is greater for the biconcave cross-section than for a linear geometry. Thus, the bi-concave geometry contributes to an improved strength of the cutting portion, or alternatively to a smaller cutting width at a maintained strength. The greater width at the center also contributes to an improved heat transport. In some applications, it is estimated that the strength can be maintained at a 25% to 35% reduction in cutting width, as compared to conventionally ground cutting inserts with a linear geometry. The cutting insert can be made narrower, which contributes reduction in material costs when manufacturing the cutting insert, which in extension contributed to reduced production costs. It also means that less material is removed from a work part in cutting or parting-off applications, which contributes to reduced application costs when using the cutting insert.

The biconcave cross-section means that the cross-section has its smallest width at the center between the first and second cutting faces where the first plane bisects the cutting portion and its greatest width at the first and second cutting faces. The width at the bisection of the cutting portion by the first plane may in the range 0.3 to 0.8, 0,4 to 0.7, or 0.5 to 0.6 times smaller than the width at the first and second cutting faces, or at the first and second cutting edges.

The cutting portion may have a cross-section extending between the first cutting face and the second cutting face, and/or transverse to the first plane, that is concave on the first side surface. Similarly, the cross-section extending between the first cutting face and the second cutting face, and/or transverse to the first plane, may be concave on the second side surface. The resulting geometry has the same advantages as the abovementioned bi-concave geometry.

The term "transverse to" is understood to encompass "oriented at a right angle to". The cutting portion having a cross-section is understood to encompass the cutting portion having the cross-section along a portion of a bisection of the cutting portion by the first plane, or along the complete bisection of the cutting portion by the first plane. Alternatively, it is understood to encompass the cutting portion having the cross-section along a portion of the cutting portion between the proximal end and the distal end of the cutting portion, or between the proximal end and the distal end, or the flank face, of the cutting portion. A bisection by the first plane is understood to encompass an intersection formed by the first plane. For example, this means that it encompasses a line in the first side surface at which the first plane meets the cutting portion. The cross-section may change in shape and/or dimension along the portion of a bisection, along the complete bisection or between the proximal end and the distal end of cutting portion.

According to a second aspect of the proposed technology, an indexable cutting insert for a cutting tool is provided, wherein the cutting insert comprises: a first side surface and an opposing second side surface, and a peripheral surface extending between the first side surface and the second side surface. The cutting insert further comprises: a cutting portion. The cutting portion may comprise a first cutting face, a flank face, and a first cutting edge between the first cutting face and the flank face. The cutting portion may have a proximal end and a distal end. The first cutting edge and/or the flank face are located at the distal end of the cutting portion.

### Detailed description

Further details of the first aspect of the proposed technology are described below.

The cutting portion may be bisected by a second plane transverse, or perpendicular, to the first plane. The second plane may be aligned with the first side surface, or centered between and extending in the same directions as the first side surface and the second side surface. The cutting portion being bisected by a second plane is understood to encompass the second plane dividing the cutting portion in two congruent portions, or the cutting portion being constituted by third and fourth congruent portions with respect to a second plane.

On the cutting portion, the first side surface may be concave and define, or have the shape of, a portion of a surface of a first cylinder having its axis in the first plane. Additionally, on the cutting portion, the second side surface may be concave and define, or have the shape of a portion of a surface of a second cylinder having its axis in the first plane. The first cylinder and/or the second cylinder may be elliptic cylinders. The first cylinder and the second cylinder may be congruent. The portion of the surface of the first cylinder and the portion of the surface of the second cylinder may be congruent. The axis of the first cylinder and/or the axis second cylinder may define angle to the second plane in the range 0.5° to 4°, or in the range 1° to 3°. The first cylinder and the second cylinder may exhibit reflection symmetry and/or rotational symmetry with respect to the second plane.

The cutting portion may have a radial side clearance angle in the range 0° to 4°, in the range 0.5° to 3°, or preferably in the range 1° to 2.5°. The radial side clearance angle is understood to encompass the angle between the second plane and a line tangential to the first side surface at the first cutting edge, at the flank face, and/or at the second cutting edge and in a plane parallel to the first plane.

The cutting portion may have a tangential side clearance angle in the range 2.5° to 10°, or 4° to 8°. The tangential side clearance angle is understood to encompass the angle between the second plane and a line tangential to the first side surface at the first cutting edge, at the first cutting face, at the second cutting face, and/or at the second cutting edge and in a plane perpendicular, or transverse, to the first plane and the second plane.

The axis of the first cylinder and the axis of the second cylinder may diverge in the direction of the flank face. Alternatively or additionally, the cutting portion may have a width between the first side surface and the second side surface that increases towards the flank face. This has the effect that the cutting insert has a radial side clearance that increases from the cutting edge, or from the flank face, which is advantageous in groove-turning and parting-off. Work parts of greater diameter can be cut off and the geometry contributes to an improved chip flow.

The flank face may be concave and/or curve inwards with respect to the cutting portions, for example along the intersection between the flank face and the first plane. This has the effect that the cutting insert has a front clearance during use, both with respect to the first cutting edge and the second cutting edge, since the flank face is located between the first cutting edge and the second cutting edge.

The first cutting face may have a first rake portion juxtaposed to, or at, the first cutting edge. The first rake portion may be concave and/or curve inward with respect to the cutting portion, or with respect to the first cutting face. The second cutting face may have a second rake portion juxtaposed to, or at, the second cutting edge. The second rake portion may be concave and/or curves inward with respect to the cutting portion, or with respect to the second cutting face. The first side surface and/or the first rake portion may define a positive rake angle with respect to a work part in the intended orientation during use. Similarly, the second side surface and/or the second rake portion may define a positive rake angle with respect to a work part in the intended orientation during use.

Each cutting edge may extend from the first side surface to the second side surface, or is located or crosses the peripheral surface. The first cutting edge and the second cutting edge may have equal lengths. The first cutting edge and the second cutting edge may be parallel. The first cutting edge and the second cutting edge may define a maximum cutting width of the cutting portion. The flank face mah have a non-finite width, which means that it does not form an edge parallel to the first plane between the first cutting edge and the second cutting edge.

Further details of the first and second aspects of the proposed technology are described below.

The cutting insert may have a base portion, wherein the cutting portion is attached to the base portion at the proximal end of the cutting portion.

The base portion may be configured to be attached to a tool holder. The cutting insert may comprise only a single cutting portion. This means that the cutting edges are located on the same end on the cutting insert, which has the effect of a shorter cutting insert, which in extensions allows for smaller tool holders. It is estimated that the reduction in length can be as large as 35% compared with indexable cutting insert having cutting edges on opposite sides of a base portion. Additionally, the cutting insert may comprise only a single base portion.

The cutting portion may have a smaller width between the first side surface and the second side surface than the base portion.

The cutting portion may have a width between the first side surface and the second side surface that increases when going from the proximal end to the distal end of the cutting portion. Additionally or alternatively, the first side surface and the second side surface may diverge from one another when going from the proximal end to the distal end of the cutting portion. This has the effect that the cutting insert has a side clearance that increases from the cutting edges, or from the flank face, towards the base portion.

The base portion may have a through-going circular hole between the first side surface and the second side surface. The through-going circular hole may be configured for receiving a screw securing the cutting insert to a tool holder. The circular hole may have its axis in the first plane. Additionally or alternatively, the circular hole may be transverse, or perpendicular to the second plane. The base portion may have a first beveled, or tapered, edge between the circular hole and the first side surface and a second beveled, or tapered, edge between the circular hole and the second side surface. The first and second beveled edges may be configured to cooperate with a tapered head of a screw securing the cutting insert to a tool holder.

In the first aspect of the proposed technology, the base portion may be bisected by the first plane transverse to the first side surface. In the second aspect of the proposed technology, the base portion may be bisected by a first plane transverse to the first side surface. The base portion being bisected by the first plane is understood to encompass the first plane dividing the base portion in two congruent portions, or the base portion being constituted by first and second congruent portions with respect to a first plane transverse to the first side surface. The first plane may cut the through-going circular hole in two congruent portions. Congruent portions are here understood to encompass the shape of the portions being transformable to one another by reflection and/or rotation.

The base portion may have a first planar portion, or first planar surface portion, on the first side surface and a second planar portion, or second planar surface portion, on the second side surface, wherein the first planar portion and the second planar portion are parallel. The through-going circular hole may go between the first planar portion and the second planar portion. The first planar portion and the second planar portions are intended to abut a planar surface on a tool holder and may constitute the largest surface of contact between the cutting insert and the tool holder.

At each point on the base portion between the first side surface and the peripheral surface, the first side surface may be at a right angle to the peripheral surface. Similarly, at each point on the base portion between the second side surface and the peripheral surface, the second side surface may be at a right angle to the peripheral surface. This means that no material is lost by beveling the edges of the base portion, which contributes to an easier and cheaper manufacturing.

The base portion may have a portion shaped as a sector of a ring of uniform thickness. The sector of the ring may correspond to a circular sector with a sector angle in the range 60° to 180°, in the range 90° to 180°, in the range 120° to 180°, or in the range 150° to 180°. A circular sector with a sector angle of 180° is understood to correspond to half-disc, and a circular sector with a sector angle of 60° is understood to correspond to a sextant. The portion shaped as a sector of a ring may have a uniform radial thickness.

The base portion may have a proximal end and a distal end, wherein the base portion is attached to the cutting portion at the distal end of the base portion. It is understood that the proximal end and the distal end are on opposed sides of the base portion. The portion shaped as a sector of a ring may be located at the proximal end of the base portion. The circular hole may form, or define, the inside surface of the sector of the ring and a portion of the peripheral surface may form, or define, the outside surface of the ring.

On the base portion, a portion of the peripheral surface may be convex and define, or have the shape of, a portion of a surface of a third cylinder having its axis in the first plane. The axis of the third cylinder may be collinear with the axis of the circular hole. Alternatively or additionally, the third cylinder and the circular hole may be concentric.

The base portion may haves a rounded profile at the proximal end of the base portion. The peripheral surface may be a smooth surface on the base portion. A smooth surface is understood to encompass a surface having no sharp features, such as corners or edges. The peripheral surface may be curved in a single dimension around the base portion. This means that the peripheral surface is curved only in the second plane and not in the first plane.

The cutting portion may have a thickness transverse to the first plane that increases, or generally increases, when going from the proximal end to the distal end, or to a point at the distal end, of the cutting portion. The influence of any rake portions on the thickness may be disregarded.

In the first aspect of the proposed technology, the first cutting face may have a first planar face portion and the second cutting face may have a second planar face portion, wherein the first planar face portion and the second planar face portions diverge from one another when going from the from the proximal end towards the distal end of the cutting portion. The first planar face portion and the second planar face portion may define and angle between them in the range 6° to 18°, in the range 8° to 16°, or in the range 10° to 12°. The first planar face portion and the second planar face portion may extend from the proximal end of the cutting portion to the distal end of the cutting portion, or to the first rake portion and the second rake portion respectively. This has the effect that the cutting insert can cut work parts with greater diameter, or that the cutting insert can be made smaller with maintained diameter of the work parts. An increasing thickness towards the proximal end of the cutting portion together with the abovementioned cylindrical geometry of the first side surface and the second side surface has the effect that the tangential side clearance angle is the greatest at the first and second cutting edges and decreases towards the proximal end of the cutting portion, thus synergistically contributing to an improved cutting geometry. The increasing thickness also contributes to a greater positive rake angle, which improves the chip flow from the cutting.

The thickness of the cutting portion transverse to the first plane at the first cutting edge and the second cutting edge, or the distance between the first cutting edge and the second cutting edge, may be 3 to 10 times greater than the width of the cutting portion parallel to the first plane at the first cutting edge and the second cutting edge, or 3 to 10 times greater than the cutting width defined by the first cutting edge and/or the second cutting edge. Here, the width is understood to be smaller than the thickness. The length of the cutting edges determined the width of the cut, and the term "width" is used for the corresponding dimension of the cutting portion.

The cutting insert may constitute a unitary body. This means that there is a seamless transition between the base portion and the cutting portion. This also means that the cutting insert is manufactured from a single piece of material.

The cutting insert may be of sintered or cemented carbide. The sintered or cemented carbide may be a tungsten carbide. The cutting portion may be a grinded portion. The base portion may be a non-grinded potion. A grinded portion is understood to be a portions shaped or formed in part or in full by grinding. A non-grinded portion is understood to be a portion that has not been subjected to grinding.

It should be noted that the geometric features of the base portion may be regarded as independent from the convex and double sided geometry of the cutting portion. Different portions of the cutting insert are described above, and it is understood that the different cutting portions can overlap.

### Brief description of the drawings

A more complete understanding of the abovementioned and other features and advantages of the proposed technology will be apparent from the following detailed description of a preferred embodiment in conjunction with the appended drawings, wherein:
- Fig. 1: is perspective view of an embodiment of a cutting insert,
- Fig. 2: is a top view of the cutting insert of Fig. 1,
- Fig. 3: is a side view of the cutting insert of Fig. 1, and
- Fig. 4: is a front view of the cutting insert of Fig. 1.

### Description of the drawings

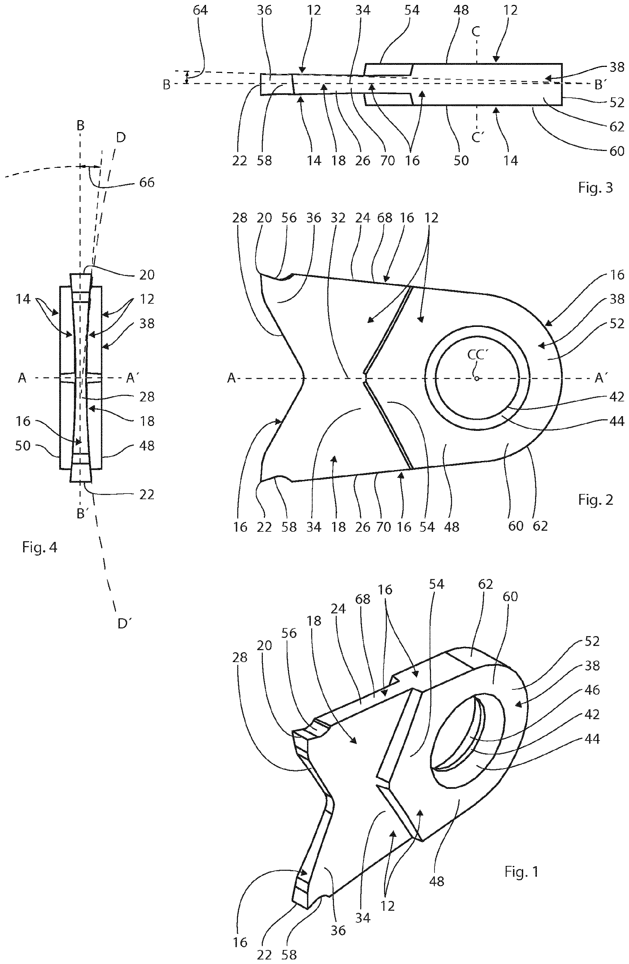

Figs. 1-4 show different views of an embodiment of cutting insert 10 according to the proposed technology. The cutting insert 10 is intended for turning applications. The cutting insert 10 constitutes a unitary body of sintered tungsten carbide. The cutting insert 10 has a first side surface 12 and an opposing second side surface 14, and a peripheral surface 16 extending between the first side surface 12 and the second side surface 14. The first side surface 12 and the second side surface 14 extends along the complete length of the cutting insert 10, and the peripheral surface 16 encircles the complete cutting insert 10. The cutting insert is divided into a single cutting portion 18 and a single base portion 38. The cutting portion has been shaped by grinding, while the base portion 38 has been shaped in the sintering process.

The cutting portion 18 has a proximal end 34 and a distal end 36. The cutting portion 18 is attached to the base portion 38 at the proximal end 34 of the cutting portion 18. Similarly, the base portion 38 has a proximal end 52 and a distal end 54. The base portion 38 is attached to the cutting portion 18 at the distal end 54 of the base portion 38.

The cutting portion 18 and the base portion 38 are bisected by a first plane AA' transverse to the first side surface 12. This means that the first plane AA' divides each of the cutting portion 18 and the base portion 38 in two congruent portions, or the complete cutting insert 10 in two congruent portions. The cut of first plane AA' is indicated by the dashed lines AA' in Figs. 2 and 4. The congruent portions have a 180° reflection and rotation symmetry with respect to the first plane AA', as is apparent from Figs. 1-4. Similarly, the cutting portion 18 and the base portion 38 are bisected by a second plane BB' transverse to the first plane AA', which means that the second plane BB' is roughly aligned with the first side surface 12 and the second side surface 14. The second plane BB' divides each of the cutting portion 18 and the base portion 38 in two congruent portions, or the complete cutting insert 10 in two congruent portions. The cut of second plane BB' is indicated by the dashed lines BB' in Figs. 3 and 4. The congruent portions also have a 180° reflection and rotation symmetry with respect to the second plane BB', as is apparent from Figs. 1-4.

The cutting portion 18 has a first cutting face 24 and an opposing second cutting face 26. A flank face 28 extends between the first cutting face 24 and the second cutting face 24. It further has a first cutting edge 20 between the first cutting face 24 and the flank face 28 and a second cutting edge 22 between the second cutting face 26 and the flank face 28. The first cutting edge 20, the second cutting edge 22, and the flank face 28 are located at the distal end 36 of the cutting portion 18. The cutting edges 20 and 22 are parallel and extend from the first side surface 12 to the second side surface 14. They define the same cutting width, since the first plane AA' and the second plane divide the cutting portion in congruent portions.

The base portion 38 has a first planar portion 48 on the first side surface 12 and a second planar portion 50 on the second side surface 14. The first planar portion and the second planar portion are parallel. A through-going circular hole 42 extends between the first planar portion 48 and the second planar portion 50.

The first side surface 12 of the cutting portion 18 is concave and has the shape of a portion of a surface of a first cylinder having its axis in the first plane AA'. Similarly, the second side surface 14 of the cutting portion 18 is concave has the shape of a portion of a surface of a second cylinder also having its axis in the first plane AA'. The axis of the first cylinder and the axis of the second cylinder diverge in the direction form the proximal end 34 to the distal end 36 of the cutting portion 38, or towards the flank face 28, and both define an angle to the second plane BB' of 2°. The first cylinder and the second cylinder are congruent elliptic cylinders. A portion of a cross-section of en elliptic cylinder is indicated by the dashed line DD'. The portion of the surface of the first cylinder and the portion of the surface of the second cylinder are congruent.

The fact that the axes of the elliptic cylinders diverge in the direction of the flank face 28 means that the cutting portion 18 has a width between the first side surface 12 and the second side surface 14 that increases towards the flank face 28, and that the first side surface 12 and the second side surface 14 diverge from one another when going from the proximal end 34 to the distal end 36 of the cutting portion 18. The fact that both axes of the elliptic cylinders define an angle to the second plane BB' of 2° means that the cutting portion 18 has a radial side clearance angle 64 of 2° on either side of the cutting portion 18.

The fact that both the first side surface 12 and the second side surface 14 are concave, and the fact that the elliptic cylinders are oriented in the same general directions, means that cutting portion 18 has a biconcave cross-section transverse to the first plane AA' along the complete length from the proximal end 34 to the flank face 28. Effectively, this means that the cutting portion 18 has a cross-section transverse to the first plane AA' that is concave on the first side surface 12 and on the second side surface 14. The biconcave cross-section causes the cutting portion 18 to have a tangential side clearance angle 66 of 4°.

The flank face 28 is concave and curves inwards with respect to the cutting portions 18. This causes the cutting portion 18 to have a front clearance during use, both with respect to the first cutting edge 20 and the second cutting edge 22.

The first cutting face 24 has a first rake portion 56 at the first cutting edge 20. Similarly, the second cutting face 24 has a second rake portion 58 at the second cutting edge 22. Both rake portions 56 and 58 are concave and curves inward with respect to the cutting portion 18 and define a positive rake angle with respect to a work part in the intended orientation during use.

The first cutting face 24 has a first planar face portion 68 extending from the proximal end 34 of the cutting portion 18 to the first rake portion 56. Similarly, the second cutting face 26 has a second planar face portion 70 extending from the proximal end 34 of the cutting portion 18 to the second rake portion 58. The first planar face portion 68 and the second planar face portions 70 diverge from one another when going from the proximal end 34 towards the distal end 36 of the cutting portion 18. This means that the cutting portion 18 has a thickness, or height, transverse to the first plane AA' that increases when going from the proximal end 34 to the distal end 36 of the cutting portion 18, disregarding the first and second rake portions 56 and 58. The first planar face portion 68 and the second planar face portion 70 define and angle between them of 12°. The maximum height of the cutting insert 10 is defined by the distance between the first cutting edge 20 and the second cutting edge 22. The maximum height is about eight times greater than the cutting width corresponding to the length of the first cutting edge 20 and the second cutting edge 22.

The base portion 38 is intended to be attached to a tool holder by a screw received in the through-going circular hole 42 an operatively connecting to a threaded bore in the tool holder. Each of the first planar portion 48 and the second planar portion 50 of the base portion 38 is intended to, one at a time, press against a planar surface on a tool holder during use.

The axis DD' of the circular hole 42 is in the first plane AA' and perpendicular to the second plane BB'. The base portion 38 has a first beveled edge 44 between the circular hole 42 and the first side surface 12 and a second beveled edge 46 between the circular hole 42 and the second side surface 14.

The base portion 38 has a rounded profile at its proximal end 52 with a portion 60 shaped as a sector of a ring of uniform radial thickness and located at the proximal end 52. This means that a portion 62 of the peripheral surface 16 on the base portion 38 is convex in the second plane BB' and has the shape of a portion of a surface of a third cylinder with an axis that is collinear or coaxial with the axis DD' of the circular hole 42. It also means that the third cylinder and the circular hole 42 are concentric.

The peripheral surface 16 is a smooth surface on the base portion 38 without any sharp features. The peripheral surface 16 is curved only in the second plane BB' around the base portion, which means that it is curved in a single dimension only. The peripheral surface has the same profile in a cross-section aligned or parallel with the second surface BB'.

There is no bevel between the first side surface 12 and the peripheral surface 16 or between second side surface 14 and the peripheral surface 16. The first side surface 12 and the peripheral surface 16 define right angle between them where they connect. Similarly, the second side surface 14 and the peripheral surface 16 define right angle between them where they connect. This means that at each point on the base portion 38 between the first side surface 12 and the peripheral surface 16, the first side surface 12 is at a right angle to the peripheral surface 16, and that at each point on the base portion 38 between the second side surface 14 and the peripheral surface 16, the second side surface 14 is at a right angle to the peripheral surface 16.

### Item list

- AA': first plane
- BB': second plane of first cylinder
- CC': axis of circular hole
- 10: insert
- 12: first side surface
- 14: second side surface
- 16: peripheral surface
- 18: cutting portion
- 20: first cutting edge
- 22: second cutting edge
- 24: first cutting face
- 26: second cutting face
- 28: flank face
- 32: bisection
- 34: proximal end of cutting portion
- 36: distal end of cutting portion
- 38: base portion
- 42: circular hole
- 44: first beveled edge
- 46: second beveled edge
- 48: first planar portion
- 50: second planar portion
- 52: proximal end of base portion
- 54: distal end of base portion
- 56: first rake portion
- 58: second rake portion
- 60: ring-shaped portion
- 62: convex portion of peripheral surface
- 64: radial side clearance angle
- 66: tangential side clearance angle
- 68: first planar face
- 70: second planar face

## Claims

1. An indexable cutting insert (10) for a cutting tool, comprising:
- a first side surface (12) and an opposing second side surface (14), and a peripheral surface (16) extending between the first side surface (12) and the second side surface (14);
- a cutting portion (18) comprising a first cutting face (24) and an opposing second cutting face (26), a flank face (28) extending between the first cutting face (24) and the second cutting face (26), a first cutting edge (20) between the first cutting face (24) and the flank face (28), and a second cutting edge (22) between the second cutting face (26) and the flank face (28);
- wherein the cutting portion (18) is bisected by a first plane (AA') transverse to the first side surface (12); and
- wherein the cutting portion (18) has a biconcave cross-section transverse to the first plane (AA').

2. The cutting insert (10) according to claim 1, wherein, on the cutting portion (18), the first side surface (12) is concave and defines a portion of a surface of a first cylinder having its axis in the first plane (AA').

3. The cutting insert (10) according to claim 1 or 2, wherein, on the cutting portion (18), the second side surface (14) is concave and defines a portion of a surface of a second cylinder having its axis (CC') in the first plane (AA').

4. The cutting insert (10) according to claim 3, wherein the first cylinder and the second cylinder are elliptic cylinders, and wherein the axis of the first cylinder and the axis of the second cylinder diverge in the direction of the flank face (28).

5. The cutting insert (10) according to any of the claims 1 to 4, wherein the cutting portion (18) has a width between the first side surface (12) and the second side surface (14) that increases towards the flank face (28).

6. The cutting insert (10) according to any of the claims 1 to 5, wherein the cutting portion is bisected by a second plane (BB') transverse to the first plane (AA') and centered between and extending in the same directions as the first side surface (12) and the second side surface (14), and wherein the cutting portion (18) has a radial side clearance angle (64) in the range 1° to 2.5° between the second plane (BB') and a line tangential to the first side surface (12) at the first cutting edge (20) and at the second cutting edge (22) and in a plane parallel to the first plane (AA').

7. The cutting insert (10) according to claim 6, wherein the cutting portion (18) has a tangential side clearance angle (66) in the range 2.5° to 10°, or 4° to 8° between the second plane (BB') and a line tangential to the first side surface (12) at the first cutting edge (20) or at the second cutting edge (22) and in a plane perpendicular to the first plane (AA') and the second plane (BB').

8. The cutting insert (10) according to any of the claims 1 to 7, wherein the first cutting face (24) has a first rake portion (56) at the first cutting edge (20) and the second cutting face (26) has a second rake portion (58) at the second cutting edge (20), wherein the first rake portion (56) and the second rake portion (58) curve inward with respect to the cutting portion (18).

9. The cutting insert (10) according to any of the claims 1 to 8, wherein the cutting insert (10) has a base portion (38), the cutting portion (18) has a proximal end (34) and a distal end (36), the cutting portion (18) is attached to the base portion (38) at the proximal end (34) of the cutting portion (18), the first cutting edge (20) and the second cutting edge (22) are located at the distal end (36) of the cutting portion (18), and the base portion has a rounded profile at the proximal end of the base portion.

10. The cutting insert (10) according to claim 9, wherein the base portion has a through-going circular hole (42) between the first side surface (12) and the second side surface (14).

11. The cutting insert (10) according to claim 9 or 10, wherein the base portion (38) has a portion (60) shaped as a sector of a ring with a sector angle in the range 60° to 180°.

12. The cutting insert (10) according to claim 11, wherein the portion shaped as a sector of a ring has a uniform radial thickness.

13. The cutting insert (10) according to any of the claims 9 to 12, wherein the cutting insert (10) has a thickness transverse to the first plane first plane (AA') that increases when going from the proximal end (52) of the base portion (38) to the distal end (36) of the cutting portion (18) .

14. The cutting insert (10) according to any of the claims 1 to 13, wherein the cutting insert (10) constitutes a unitary body.

15. The cutting insert (10) according to any of the claims 1 to 14, wherein the cutting insert is of sintered or cemented carbide.
